# FASCICULE DE BREVET EUROPEEN

(11) **EP 2 342 472 B1**
(45) Date de publication et mention de la délivrance du brevet: **02.01.2013**
(21) Numéro de dépôt: 09755978.5
(22) Date de dépôt: 07.10.2009
(51) Int. Cl.: F16D 13/70, F16D 21/06

(54) **SYSTEME D'ACCOUPLEMENT COMPORTANT DES MOYENS DE LIAISON EN ROTATION SANS JEU REGLABLES AXIALEMENT ENTRE LE VOLANT MOTEUR ET LE PLATEAU DE REACTION**
AXIAL ZWISCHEN DEM SCHWUNGRAD UND DER GEGENDRUCKPLATTE VERSTELLBARE, SPIELFREIE DREHVERBINDUNGSMITTEL ENTHALTENDES VERBINDUNGSSYSTEM
COUPLING SYSTEM INCLUDING CLEARANCE-FREE ROTATIONAL LINKING MEANS AXIALLY ADJUSTABLE BETWEEN THE FLYWHEEL AND THE REACTION PLATE

(30) Priorité: 06.11.2008 FR 0857532
(43) Date de publication de la demande: 13.07.2011
(73) Titulaire: Valeo Embrayages, 80009 Amiens Cedex 2 (FR)
(72) Inventeur: FENIOUX, Daniel, F-80480 Saleux (FR)
(86) Numéro de dépôt international: PCT/FR2009/051907
(87) Numéro de publication internationale: WO 2010/052399

(56) Documents cités:
- EP-A- 1 826 427
- EP-A- 1 862 687
- EP-A- 2 039 952
- DE-A1- 19 818 412
- FR-A- 2 796 682

## Description

L'invention se rapporte à un système d'accouplement entre un arbre moteur et un arbre de transmission de véhicule automobile qui comporte un dispositif d'embrayage à friction et un volant moteur.

L'invention se rapporte plus particulièrement à un système d'accouplement entre un arbre moteur de véhicule automobile et un arbre de transmission coaxiaux qui comporte :
- un dispositif d'embrayage à friction avant qui comporte un ensemble menant rotatif qui comporte au moins un plateau de réaction ;
- un volant moteur arrière coaxial à l'ensemble menant qui est destiné à être lié en rotation avec l'arbre moteur ;
- des moyens de liaison en rotation du volant moteur et de l'ensemble menant du dispositif d'embrayage qui comportent un premier élément mâle et un deuxième élément femelle qui sont destinés à être emboîtés axialement de manière coulissante dans un intervalle de réglage en position axiale ;
- des moyens de serrage circonférentiel de l'élément mâle dans l'élément femelle dans un état serré dans lequel les éléments mâle et femelle sont en prise sans jeu circonférentiel.

Un tel volant moteur, aussi connu sous le nom de "volant d'inertie", est susceptible de filtrer les à-coups de rotation du vilebrequin formant l'arbre moteur, tout en communiquant le couple de rotation du vilebrequin au plateau de réaction du dispositif d'embrayage.

Le volant moteur est fixé à l'arbre moteur tandis que le dispositif d'embrayage est prémonté sur la boîte de vitesses. Or, il existe généralement une tolérance de positionnement axial entre le moteur et la boîte de vitesses. En d'autres termes, la distance axiale entre le moteur et la boîte de vitesses est susceptible de varier de plusieurs millimètres d'un véhicule à l'autre pour un même modèle de véhicule.

Pour prendre en compte ces tolérances axiales, il est connu de monter le volant moteur mobile axialement par rapport au plateau de réaction du dispositif d'embrayage.

Il est par exemple connu, notamment par le document FR-A-2.816.908, de monter un tronçon cannelé du volant moteur dans un élément de liaison avec le plateau de réaction. A cet effet, l'élément de liaison comporte un orifice central muni de dents radiales qui sont reçues dans les cannelures axiales.

Les cannelures axiales permettent ainsi la transmission du mouvement de rotation et du couple au plateau de réaction tout en autorisant un déplacement axial du tronçon cannelé du volant moteur sur toute l'amplitude de la tolérance axiale.

Cependant, un tel agencement est susceptible de produire des bruits de claquement entre les dents de l'élément de liaison et les cannelures, notamment lors de variations brusques de vitesse.

Pour résoudre ce problème, le document WO-A-2007/000.151 propose un dispositif anti-bruit qui comporte des moyens pour monter le volant moteur précontraint circonférentiellement par expansion dans des cannelures de l'élément de liaison au plateau de réaction afin d'éviter le claquement des dents du voile contre les cannelures.

Cependant, la précontrainte est réalisée par des moyens de rappel élastique circonférentiel formant des moyens d'amortissement qui permettent toujours un pivotement relatif de l'élément de liaison par rapport au volant moteur. Ainsi, même si les chocs sont estompés, ils sont toujours présents.

De plus, un tel dispositif anti-bruit est onéreux et complexe à réaliser car il comprend de nombreuses pièces qui viennent s'ajouter au volant moteur.

En outre, ce dispositif ne permet pas de rattraper des jeux circonférentiels important entre les dents et les cannelures, par exemple supérieurs à 1 mm.

De plus, le montage d'un tel dispositif est peu aisé car l'élément cannelé et l'élément de liaison sont peu, voire pas, visibles par un opérateur durant l'assemblage. Ceci peut provoquer des erreurs susceptibles d'allonger la durée de l'assemblage du système d'accouplement.

Pour résoudre notamment ces problèmes, l'invention propose un système d'embrayage du type décrit précédemment, caractérisé en ce que les moyens de liaison en rotation sont dotés de moyens d'emboîtement réglables axialement dans un intervalle déterminé, en ce que sont prévu des moyens de serrage circonférentiel de l'élément mâle dans l'élément femelle dans un état serré les éléments mâle et femelle étant positionnés en prise sans jeu circonférentiel, et en ce que le système d'accouplement comporte des moyens (66, 68) pour bloquer rigidement les éléments mâle et femelle dans leur état serré.

Selon d'autres caractéristiques de l'invention :
- les éléments mâle et femelle sont agencés à une périphérie extérieure du système d'accouplement ;
- l'élément mâle est formé par une patte et l'élément femelle est formé par une pince dont les mâchoires sont susceptibles de serrer circonférentiellement la patte ;
- les moyens de blocage de la pince dans son état serré sont formés par un boulon qui s'étend circonférentiellement ;
- les moyens de serrage des mâchoires sont formés par le boulon ;
- les moyens de serrage des mâchoires de la pince sont formés par des moyens de rappel élastique des mâchoires dans leur état serré ;
- la pince est formée par une pièce en forme de "U" dont les ailes flexibles formant mâchoires s'étendent axialement vers la patte jusqu'à une extrémité libre ;
- le boulon comporte une vis et un écrou, la tête de la vis étant susceptible d'être vissée par un outil de vissage ;
- la système comporte des moyens pour immobiliser l'écrou du boulon au moins en rotation par rapport à la pince ;
- l'écrou est immobilisé en rotation par coopération de formes complémentaires entre une face de la pince et l'écrou ;
- la vis du boulon traverse les mâchoires de la pince ;
- la patte comporte une échancrure qui est traversante circonférentiellement et qui est ouverte axialement vers la pince pour permettre le passage de la vis lors de l'emboîtement axial de la patte dans la pince ;
- la vis est susceptible de venir en butée axialement dans le fond de l'échancrure pour bloquer le déplacement axial de la pince dans le sens d'emboîtement par rapport à la patte ;
- l'élément mâle est porté par le plateau de réaction de l'ensemble menant du dispositif d'embrayage, et en ce que l'élément femelle est porté par le volant moteur ;
- la patte s'étend radialement vers l'extérieur depuis un bord périphérique du plateau de réaction ;
- l'élément femelle est porté par une pièce intermédiaire qui est fixée au volant moteur et qui est interposée axialement entre le volant moteur et le dispositif d'embrayage ;
- le volant moteur comporte un élément d'entrée du couple moteur et un élément de sortie du couple moteur qui sont montés solidaire en rotation avec amortissement circonférentiel, et en ce que l'élément mâle ou femelle est porté par l'élément de sortie du couple moteur ;
- le dispositif d'embrayage est un dispositif multi-disques qui comporte une pluralité de plateaux de pression.

D'autres caractéristiques et avantages de l'invention apparaîtront à la lecture de la description détaillée qui va suivre pour la compréhension de laquelle on se reportera aux dessins annexés parmi lesquels :
- la figure 1 est une demi-vue en coupe axiale selon le plan de coupe 1-1 de la figure 2 qui représente un système d'accouplement comportant un dispositif d'embrayage à friction et un double volant amortisseur qui sont assemblés par des moyens d'assemblage réalisés selon les enseignements de l'invention ;
- la figure 2 est une vue en perspective qui représente le système d'accouplement de la figure 1 ;
- la figure 3 est une vue similaire à celle de la figure 1 qui représente le système d'accouplement avant l'assemblage du volant moteur sur le dispositif d'embrayage à friction ;
- la figure 4 est une vue similaire à celle de la figure 2 qui représente le système d'accouplement avant l'assemblage du volant moteur sur le dispositif d'embrayage à friction ;
- la figure 5 est une vue de détail à plus grande échelle de la figure 4 qui représente les moyens d'assemblage du volant moteur sur le dispositif d'embrayage à friction ;
- la figure 6 est une vue de dessus qui représente les moyens d'assemblage après l'assemblage du volant moteur sur le dispositif d'embrayage ;
- la figure 7 est une vue en coupe radiale dans l'épaisseur du plateau de réaction du système d'accouplement assemblé ;
- la figure 8 est une vue de détail à plus grande échelle de la figure 7 qui représente les moyens d'assemblage ;
- la figure 9 est une vue de détail à plus grande échelle de la figure 8 qui représente les moyens d'immobilisation de l'écrou par rapport à la pince.

Dans la suite de la description, des éléments ayant des fonctions identiques, analogues ou similaires seront désignés par des mêmes numéros de référence.

Afin de faciliter la compréhension de la description et des revendications, on utilisera, à titre non limitatif, une orientation axiale dirigée d'arrière en avant qui est indiquée par la flèche "A" des figures et qui est parallèle à l'axe de rotation "B" du système d'accouplement 10, et une orientation radiale dirigée de l'intérieur vers l'extérieur depuis l'axe de rotation "B" du système d'accouplement 10. On utilisera aussi une orientation circonférentielle dirigée orthogonalement à l'axe "B" et orthogonalement à la direction radiale.

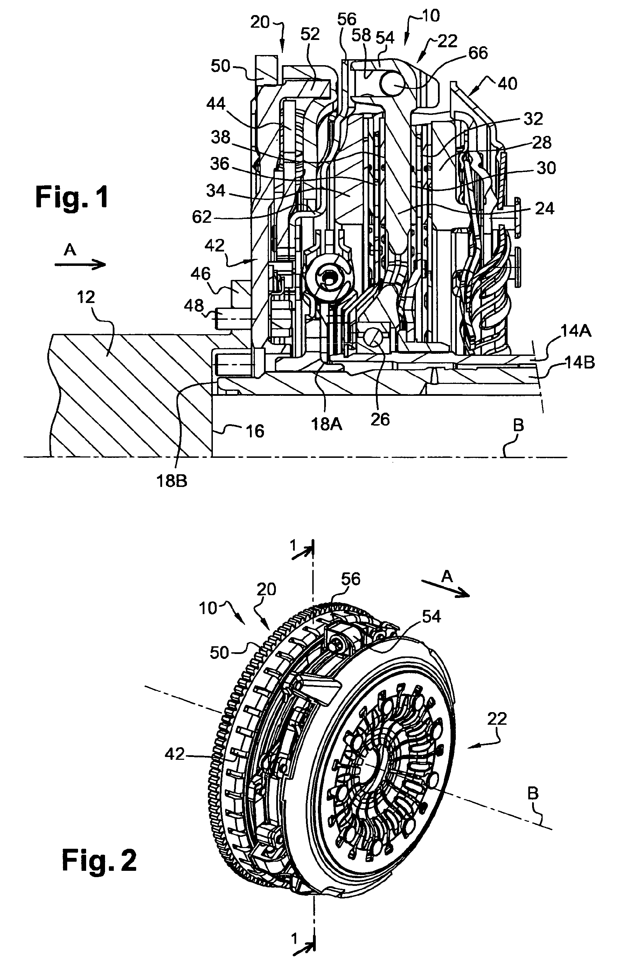

On a représenté à la figure 1 un système d'accouplement 10 assemblé qui est destiné à accoupler un arbre moteur qui est agencé axialement vers l'arrière et dont un tronçon d'extrémité avant 12 libre est représenté à gauche à la figure 1, avec au moins un arbre mené de transmission 14 qui est agencé axialement en avant.

Le tronçon d'extrémité avant 12 libre de l'arbre moteur et le tronçon d'extrémité arrière 14 correspondant de l'arbre de transmission sont tous les deux en porte-à-faux.

Dans la suite de la description et dans les revendication, par soucis de simplification, les termes "tronçon d'extrémité avant libre de l'arbre moteur 12" et "tronçon d'extrémité arrière libre de l'arbre de transmission 14" seront respectivement désignés par "l'arbre moteur 12" et "l'arbre de transmission 14", à moins qu'il ne soit précisé que l'arbre est considéré dans son ensemble.

L'arbre moteur 12 est rotatif autour d'un axe de rotation "B" et il est entraîné en rotation par un moteur (non représenté) du véhicule automobile. Il s'agit par exemple d'un vilebrequin de moteur à combustion.

Le système d'accouplement 10 représenté à la figure 1 comporte deux arbres de transmission dont les tronçons d'extrémité arrière 14A, 14B libres ont été représentés.

Les arbres de transmission 14A, 14B sont montés rotatifs sensiblement coaxialement à l'arbre moteur 12. Le premier arbre de transmission 14A forme un tube axial à l'intérieur duquel est agencé le deuxième arbre de transmission 14B. Chacun des arbres de transmission 14A, 14B est susceptible de tourner indépendamment de l'autre.

L'extrémité avant libre 16 de l'arbre moteur 12 est agencée axialement en arrière et à distance des extrémités arrière libres 18A, 18B des arbres de transmission 14A, 14B.

Les arbres de transmission 14A, 14B sont reliés à une boîte de vitesses arrière (non représentée). Plus particulièrement; le premier arbre de transmission 14A correspond à certains rapports de vitesses de la boîte de vitesses, par exemple les rapports de vitesses impairs, tandis que le deuxième arbre de transmission 14B correspond aux autres rapports de vitesses, par exemple les rapports de vitesses pairs.

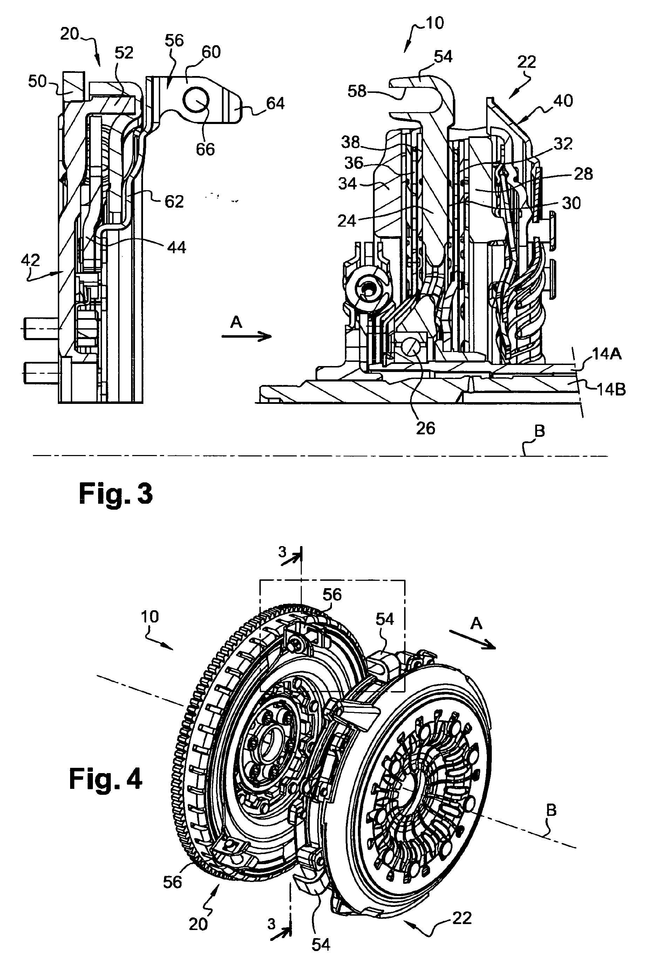

Le système d'accouplement 10 comporte un dispositif arrière de filtrage des à-coups de rotation de l'arbre moteur 12 qui est formé par un volant moteur 20 dit "double volant amortisseur", et il comporte un dispositif avant d'embrayage à friction 22. Ces deux dispositifs apparaissent plus clairement lorsqu'ils ne sont pas assemblés comme représenté aux figures 3 et 4. Ils sont destinés à être assemblés axialement l'un à l'autre pour former le système d'accouplement 10 comme cela sera expliqué par la suite.

Le dispositif d'embrayage à friction 22 est ici du type multi-disques. Il comporte des premiers moyens d'accouplement temporaire du premier arbre de transmission 14A avec l'arbre moteur 12 qui sont portés uniquement par le premier arbre de transmission 14A.

De manière connue, le dispositif d'embrayage à friction 22 comporte un plateau radial circulaire de réaction 24 qui est monté libre en rotation autour de l'axe de rotation "B". Le plateau de réaction 24 est porté par le premier arbre de transmission 14A par l'intermédiaire d'un roulement à billes 26.

Le plateau de réaction 24 est plus particulièrement monté fixe axialement par rapport au premier arbre de transmission 14A. A cet effet, la bague intérieure du roulement à billes 26 est bloquée axialement dans les deux sens, et la bague extérieure du roulement à billes 26 est montée serrée sur le plateau de réaction 24.

Par ailleurs, le plateau de réaction 24 est solidaire en rotation de l'arbre moteur 12 par l'intermédiaire du volant moteur 20 qui est agencé à une extrémité arrière du dispositif d'embrayage à friction 22 et qui sera décrit plus en détails par la suite.

Les premiers moyens d'accouplement comportent aussi un premier plateau annulaire avant de pression 28 qui est monté solidaire en rotation du plateau de réaction 24 autour de l'axe de rotation "B" et il est monté coulissant axialement par rapport au plateau de réaction 24. Le plateau avant de pression 28 est plus particulièrement agencé axialement en vis-à-vis d'une face avant 30 du plateau de réaction 24.

Un premier disque coaxial avant de friction 32 est interposé axialement entre le plateau de réaction 24 et le plateau avant de pression 28. Le disque avant de friction 32 comporte sur ses deux faces une garniture annulaire de friction.

Le disque avant de friction 32 est monté solidaire en rotation du premier arbre de transmission 14A, et il est monté coulissant axialement sur le premier arbre de transmission 14A.

Le disque avant de friction 32 est destiné à être serré contre la face avant 30 du plateau de réaction 24 par le plateau avant de pression 28 pour accoupler temporairement, c'est-à-dire de manière débrayable, le premier arbre de transmission 14A avec l'arbre moteur 12.

Le système d'accouplement 10 comporte aussi des deuxièmes moyens d'accouplement temporaire du deuxième arbre de transmission 14B avec l'arbre moteur 12 qui sont agencés symétriquement aux premiers moyens d'accouplement par rapport au plateau de réaction 24 et qui sont portés par les arbres de transmission 14A, 14B.

Les deuxièmes moyens d'accouplement comportent ainsi un deuxième plateau arrière de pression 34 et un disque arrière de friction 36 pour l'accouplage temporaire du deuxième arbre de transmission 14B avec l'arbre moteur 12. Les fonctions du plateau arrière de pression 34, respectivement du disque arrière de friction 36 sont analogues à celles du plateau avant de pression 28, respectivement du disque avant de friction 32.

Le plateau arrière de pression 34 est monté axialement en vis-à-vis de la face arrière 38 du plateau de réaction 24. Le plateau arrière de pression 34 est solidaire en rotation du plateau de réaction 24 et coulissant axialement par rapport au plateau de réaction 24.

Le disque arrière de friction 36 est monté solidaire en rotation du deuxième arbre de transmission 14B, et il est monté coulissant axialement sur le deuxième arbre de transmission 14B.

Ainsi, le disque arrière de friction 36 est destiné à être serré contre la face arrière 38 du plateau de réaction 24 par le plateau arrière de pression 34 pour accoupler temporairement le deuxième arbre de transmission 14B avec l'arbre moteur 12.

L'ensemble formé par les plateaux de pression 28, 34 et par le plateau de réaction 24 est ainsi monté solidaire en rotation de l'arbre moteur 12. Il forme ainsi un ensemble menant rotatif 40, tandis que les disques de friction 32, 36 forment, avec leur arbre de transmission 14A, 14B associé des ensembles menés rotatifs.

Le volant moteur 20 va maintenant être décrit en détail. Le volant moteur 20 est ici un double volant amortisseur qui comporte un élément arrière d'entrée du couple moteur 42 et un élément avant de sortie du couple moteur 44.

L'élément d'entrée de couple 42 est formé par un volant primaire 42 arrière annulaire qui s'étend radialement coaxialement à l'axe de rotation "B". L'élément d'entrée de couple 42 est porté par l'arbre moteur 12 et il est lié en rotation à l'arbre moteur 12 sans jeu radial, sans débattement angulaire autour de l'axe "B" et sans jeu axial.

A cet effet, une bride de fixation d'extrémité avant 46 formée à l'extrémité avant libre 16 de l'arbre moteur 12 est fixée contre une face d'extrémité arrière du volant primaire 42 de l'élément d'entrée de couple 42 par l'intermédiaire d'une pluralité de vis 48 dont une seule est représentée à la figure 1. L'élément d'entrée de couple 42 est ainsi solidaire des déplacements de l'extrémité libre 16 de l'arbre moteur 12 dans toutes les directions, et notamment axialement.

L'élément d'entrée de couple 42 porte aussi une couronne dentée de démarreur 50 qui est agencée autour d'une face axiale périphérique extérieure du volant primaire 42 de l'élément d'entrée de couple 42.

L'élément d'entrée de couple 42 comporte à sa périphérie extérieure une jupe 52 qui s'étend axialement vers l'avant depuis un bord périphérique extérieur du volant primaire 42.

L'élément de sortie de couple 44 est formé par un voile secondaire 44 qui forme un anneau s'étendant radialement autour de l'axe de rotation "B". Le voile secondaire 44 est plus particulièrement agencé radialement en avant et à distance d'une face radiale avant du volant primaire 42, à l'intérieur d'une cavité du volant primaire 42 délimitée radialement par la jupe 52.

Le voile secondaire 44 est lié en rotation avec l'élément d'entrée de couple 42 avec débattement angulaire amorti.

A cet effet, au moins un organe élastique (non représenté) à action circonférentielle est agencé dans un logement périphérique du volant primaire 42.

Un tel volant amortisseur 20 est déjà connu de l'état de la technique et ne sera pas décrit plus en détail par la suite.

Le volant moteur 20 est destiné à entraîner en rotation l'ensemble menant 40 du dispositif d'embrayage 22. A cet effet, le système d'accouplement 10 comporte aussi des moyens de liaison en rotation du volant moteur 20 et de l'ensemble menant 40 du dispositif d'embrayage 22 avec réglage axial en position entre le volant moteur 20 et le dispositif d'embrayage 22 pour rattraper les tolérances axiales.

Les moyens de liaison comportent au moins un premier élément mâle 54 et au moins un deuxième élément femelle 56 associé qui sont destinés à être emboîtés axialement.

L'élément mâle 54 est ici fixe par rapport au plateau de réaction 24 tandis que l'élément femelle 56 est fixe par rapport au voile 44 du volant moteur 20. Cependant, l'élément mâle 54 et l'élément femelle 56 sont susceptibles d'être coulissés axialement l'un par rapport à l'autre dans un intervalle de réglage dans lequel ils conservent la fonction de liaison en rotation du volant moteur 20 par rapport au dispositif d'embrayage 22 pour tenir compte de la tolérance en position axiale du volant moteur 20 par rapport au dispositif d'embrayage 22. Les moyens de liaison en rotation 54, 56 sont donc réglables axialement en position.

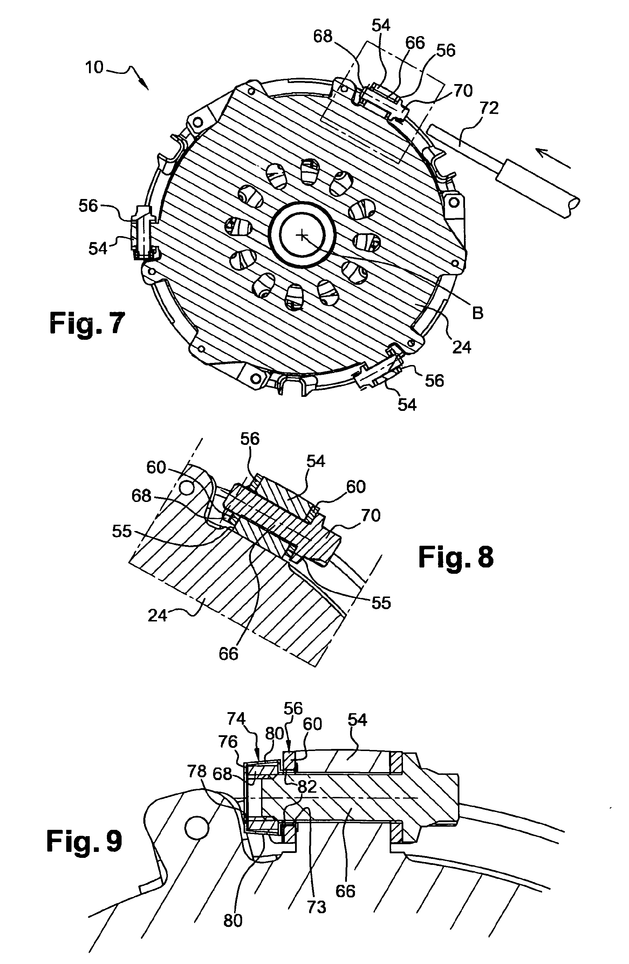

Comme représenté à la figure 7, les moyens de liaison comportent ici trois éléments mâles 54 qui sont associés à trois éléments femelles 56. Ces trois paires d'éléments 54, 56 associés sont réparties régulièrement, c'est-à-dire à 120°, autour de l'axe de rotation "B". Ces trois paires d'éléments 54, 56 étant toutes identiques dans leur structure, leur agencement et leurs fonctions, une seule paire d'éléments 54, 56 sera décrite par la suite, la description étant applicable aux autres paires d'éléments 54, 56.

Dans l'exemple représenté aux figures, l'élément mâle 56 est porté par l'ensemble menant 40 du dispositif d'embrayage 22, tandis que l'élément femelle 56 est porté par le voile 44 du volant moteur 20.

L'élément mâle 54 et l'élément femelle 56 sont agencés à une périphérie extérieure du système d'accouplement 10 de manière à être visibles lorsque le système d'accouplement 10 est assemblé, comme cela est illustré à la figure 2.

Plus particulièrement, l'élément mâle 54 est formé par une patte 54 qui s'étend radialement en saillie vers l'extérieur depuis un bord périphérique extérieur du plateau de réaction 24. La patte 54 est délimitée circonférentiellement par deux faces axiales latérales 55 parallèles entre elles.

La patte 54 est avantageusement réalisée venue de matière en une seule pièce avec le plateau de réaction 24.

La patte 54 est traversée tangentiellement par une échancrure 58 qui est ouverte axialement vers l'arrière. L'échancrure 58 est délimitée radialement par une face intérieure et une face extérieure et elle est délimitée axialement vers l'avant par un fond.

L'élément femelle 56 est formé par une pince 56 comportant deux mâchoires 60 susceptibles d'être serrées, c'est-à-dire rapprochées, circonférentiellement l'une vers l'autre. Plus précisément la pince 56 est formée par une pièce en forme de "U" comportant une âme 59 radiale circonférentielle. Des ailes 60 radiales parallèles formant mâchoires 60 s'étendent axialement vers l'avant depuis chaque bord circonférentiel de l'âme 59 jusqu'à une extrémité libre. Les ailes 60 sont plus particulièrement flexibles élastiquement pour permettre leur serrage circonférentiel.

L'âme 59 de la pince 56 présente une largeur circonférentielle sensiblement égale à celle de la patte 54.

La pince 56 est portée par une pièce intermédiaire 62 qui est fixée au voile 44 du volant moteur 20 et qui est interposée axialement entre le volant moteur 20 et le dispositif d'embrayage 22.

La pièce intermédiaire 62 est plus particulièrement formée par une tôle annulaire coaxiale à l'axe "B" et qui présente une grande rigidité en torsion autour dudit axe "B". La pièce intermédiaire 62 est fixée par sa périphérie intérieure contre la face avant du voile 44 par tous moyens de fixation adapté, par exemple par rivetage, par soudage ou par collage.

L'âme 59 de la pince 56 s'étend radialement en saillie depuis le bord périphérique extérieur de la pièce intermédiaire 62 de manière à être agencée en vis-à-vis de la patte 54.

La pince 56 est avantageusement réalisée venue de matière avec la pièce intermédiaire 62, par exemple par découpage et pliage de la tôle constituant la pièce intermédiaire 62.

Lorsque la patte 54 est emboîtée axialement entre les mâchoires 60 de la pince 56, la patte 54 et la pince 56 sont en prise circonférentiellement dans les deux sens pour lier en rotation le voile 44 du volant moteur 20 et l'ensemble menant 40 du dispositif d'embrayage 22.

La longueur axiale des mâchoires 60 est suffisante pour permettre de régler la position axiale de la patte 54 par rapport à la pince 56 restant en prise circonférentiellement. En d'autres termes, il est possible de faire coulisser axialement la patte 54 dans la pince 56 sur un intervalle de réglage délimité par une position axiales extrême avant dans laquelle la patte 54 est engagée entre les tronçons d'extrémité libre 64 des mâchoires 60 et une position axiale extrême arrière dans laquelle la patte 54 est en butée contre l'âme 59 de la pince 56, la fonction de liaison en rotation autour de l'axe "B" étant assuré sur tout l'intervalle de réglage.

Les mâchoires 60 de la pince 56 sont susceptibles de serrer ou pincer circonférentiellement la patte 54 formant ainsi des moyens de serrage circonférentiel de l'élément mâle dans l'élément femelle dans un état serré dans lequel les éléments mâle et femelle sont en prise sans jeu circonférentiel pour empêcher des bruits de claquement de la patte 54 contre les mâchoires 60.

Les moyens de serrage des mâchoires 60 de la pince 56 sont par exemple formés par des moyens de rappel élastique des mâchoires 60 dans leur état serré. Les mâchoires 60 étant ici formées par des ailes souples et élastiquement déformable de la pince 56, c'est l'élasticité propre des ailes qui forment les moyens de rappel élastique.

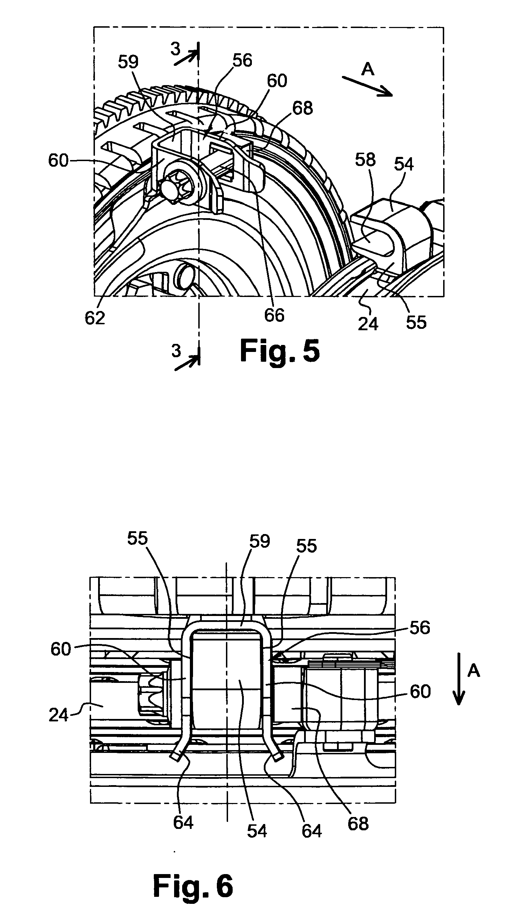

Comme représenté plus clairement aux figures 5 et 6, pour faciliter l'emboîtement de la patte 54 dans la pince 56, l'extrémité avant libre 64 des mâchoires 60 est recourbée dans une direction circonférentielle opposée à l'autre mâchoire 60. Les extrémités libres 64 des mâchoires 60 sont ainsi écartées l'une de l'autre de manière que les deux extrémités recourbées 64 forment un entonnoir dans lequel la patte 54 est susceptible d'être guidée lors de l'emboîtement axial.

De plus, les extrémités recourbées 64 servent aussi de rampe de guidage pour commander automatiquement l'écartement des mâchoires 60 par contact avec la patte 54 lors de l'emboîtement axial.

Le système d'accouplement 10 comporte aussi des moyens pour bloquer rigidement l'élément femelle 56 dans son état serré par rapport à l'élément mâle 54.

Comme représenté aux figures, les moyens de blocage de la pince 56 dans son état serré sont formés par un boulon 66, 68 qui s'étend circonférentiellement.

Le boulon 66, 68 comporte une vis 66 et un écrou 68.

La vis 66 comporte une tige filetée qui s'étend circonférentiellement et qui comporte une tête 70 d'extrémité présentant une empreinte qui est ici en forme d'étoile. La tête de vis 70 est ainsi susceptible d'être vissée par un outil de vissage 72, comme représenté à la figure 7. Le vissage est notamment facilité par le fait que la patte 54 et la pince 56 sont agencées à la périphérie extérieure du système d'accouplement 10, permettant ainsi un accès aisé à la tête de vis 70.

La vis 66 du boulon traverse orthogonalement les mâchoires 60 de la pince 56 de part en part. A cet effet, chaque mâchoire 60 comporte un orifice 73 de passage de la vis 66 de manière que la tête de vis 70 soit agencé en appui contre une face externe d'une mâchoire 60, tandis qu'un tronçon d'extrémité libre de la tige filetée s'étend en saillie par rapport à la face externe de l'autre mâchoire 60. Le terme "face externe" est ici à comprendre comme "face d'une mâchoire étant tournée dans une direction opposée à l'autre mâchoire 60".

Le tronçon de la vis 66 qui est compris entre les deux mâchoires 60 est destiné à être reçu dans l'échancrure 58 de la patte 54, notamment pour permettre le coulissement axial du volant moteur 20 par rapport au dispositif d'embrayage 22, mais aussi pour immobiliser radialement le volant moteur 20 par rapport au dispositif d'embrayage 22. Le fond axial de l'échancrure 58 est aussi destiné à former une butée qui coopère avec la vis 66 pour bloquer le déplacement axial du volant moteur 20 dans le sens d'emboîtement par rapport au dispositif d'embrayage 22.

L'écrou 68 est destiné à être vissé autour de l'extrémité libre en saillie de la tige filetée de manière que les mâchoires 60 soient bloquées entre la tête de vis 70 et l'écrou 68 dans leur état serré circonférentiellement.

Pour permettre de visser la vis 66 dans l'écrou 68, l'écrou 68 est immobilisé en rotation par rapport à la mâchoire 60 associée de la pince 56.

L'écrou 68 est immobilisé au moins en rotation par coopération de formes complémentaires entre une face de la pince 56 et l'écrou 68.

A cet effet, l'écrou 68 présente une forme qui n'est pas de révolution autour de l'axe de la vis 66. L'écrou 68 présente par exemple un profil carré.

L'écrou 68 est reçu dans une cage 74 qui est fixée contre la face externe de la mâchoire 60 de manière que l'écrou 68 soit emprisonné entre la cage 74 et la mâchoire 60. L'écrou 68 est ainsi fixé axialement contre la mâchoire 60.

La cage 74 est formée par une pièce de tôle élastiquement déformable présentant un fond 76 radial axial de dimensions et de forme complémentaire à celle de l'écrou 68. Le fond 76 est agencé circonférentiellement en vis-à-vis et à distance de la face externe de la mâchoire 60 associée de manière que l'écrou 68 soit reçu entre le fond 76 et ladite face externe.

Le fond 76 présente un trou 78 pour permettre le passage de la tige filetée de la vis 66.

Le fond 76 est flanqué par deux parois latérales 80 opposées, ici intérieure et extérieure, qui s'étendent qui s'étendent circonférentiellement en direction de la mâchoire 60.

L'extrémité libre de chaque paroi latérale 80 comporte un crochet 82 qui est destiné à accrocher intérieurement un bord de l'orifice de passage 73 de la mâchoire 60. L'orifice de passage 73 présente un profil non circulaire de manière à bloquer la rotation de la cage 74 par rapport à la mâchoire 60.

L'accrochage des crochets 82 est réalisé par déformation élastique en flexion des parois latérales 80 de la cage 74, permettant ainsi le rapprochement des crochets 82 pour leur introduction selon une direction circonférentielle dans l'orifice de passage 73. Les parois latérales 80 sont ensuite rappelées élastiquement vers leur état non contraint de manière à provoquer l'accrochage des crochets 82.

L'écrou 68 est ainsi immobilisé axialement entre le fond 76 de la cage et la mâchoire 60, et radialement entre les deux parois latérales 80. De plus, chaque paroi latérale 80 est plane de manière à coopérer avec un pan périphérique de l'écrou 68 pour immobiliser l'écrou 68 en rotation par rapport à la pince 56.

Selon une variante non représentée de l'invention, l'écrou 68 peut aussi être fixé à la mâchoire 60 associée de la pince 56 par d'autres moyens, par exemple par sertissage ou par soudage.

Avantageusement, l'écrou 68 comporte des moyens pour empêcher le dévissage intempestif de la vis 66. L'écrou 68 est par exemple un écrou freiné tel qu'un écrou fendu.

En variante, un adhésif, aussi connu sous l'appellation "frein filet", peut être déposé sur la tige filetée de la vis 66 pour empêcher le dévissage de l'écrou 68 par collage sur la vis 66.

Lors de l'assemblage du système d'accouplement 10, la vis 66 et son écrou 68 sont prémontés sur la pince 56 associée dans une position non serrée afin de permettre l'écartement suffisant des mâchoires 60 pour l'emboîtement axial sur la patte 54 associée.

Puis le dispositif d'embrayage 22 est agencé axialement en vis-à-vis du volant moteur 20 de manière que chaque patte 54 soit en coïncidence avec la pince 56 associée.

Le dispositif d'embrayage 22 est ensuite coulissé axialement vers le volant moteur 20 de manière que chaque patte 54 soit emboîtée axialement entre les mâchoires 60 de la pince 56 associée.

La vis 66 est reçue dans l'échancrure 58 de la patte 54. La vis 66 est susceptible de venir en butée axialement dans le fond de l'échancrure 58 pour bloquer le déplacement axial de la pince dans le sens d'emboîtement par rapport à la patte 54.

En outre, le volant moteur 20 est immobilisé radialement dans tous les sens par rapport au dispositif d'embrayage 22 par le contact entre les vis 66 et les faces axiales intérieures et extérieures des échancrures 58 des pattes 54.

Puis, lors de l'installation du système d'accouplement 10 dans le compartiment moteur du véhicule associé, le volant moteur 20 peut être coulissé axialement vers l'arrière par rapport au dispositif d'embrayage 22 pour permettre sa fixation sur l'arbre moteur 12. Ce coulissement est réalisé dans l'intervalle de réglage de manière que la patte 54 soit toujours engagée entre les mâchoires 60 de la pince 56 dans sa nouvelle position axiale.

L'échancrure 58 de la patte 54 et les mâchoires 60 de la pince 56 ont des longueurs axiales suffisantes pour permettre ce coulissement tout en assurant que la patte 54 demeure emboîtée ou engagée entre les mâchoires 60 de la pince 56.

L'outil de vissage 72 est ensuite engagé sur la tête de vis 70 pour permettre le blocage, voire le serrage, des mâchoires 60 de chaque pince 56 dans un état serré circonférentiellement. La patte 54 est alors immobilisée axialement par rapport à la pince 56.

Toutes ces opérations sont facilitées par le fait que l'opérateur voit clairement les moyens de liaison 54, 56 même après assemblage.

De plus, les moyens de liaison comportant une telle pince 56 permettent de rattraper des jeux circonférentielles importants, par exemple de l'ordre de plusieurs millimètres, de manière simple et efficace.

Selon une variante non représentée de l'invention, dans leur état de repos, les mâchoires de la pince sont ouvertes suffisamment pour recevoir la patte avec jeu circonférentiel. Dans ce cas, les mâchoires de la pince sont serrées autour de la patte par le vissage de la vis dans l'écrou.

L'invention a été décrite pour un système d'accouplement 10 équipé d'un double volant amortisseur 20. On comprendra qu'elle est aussi applicable à un volant d'inertie simple ou à un volant d'inertie dit "flexible". Dans ce cas, l'élément d'entrée de couple et l'élément de sortie de couple sont formés par une unique pièce annulaire formant le volant moteur.

L'invention a été décrite pour un dispositif d'embrayage à friction 22 multi-disques comportant un unique plateau de réaction et deux plateaux de pression. On comprendra que l'invention est aussi applicable à un dispositif d'embrayage simple ou multi-disques dans lequel l'ensemble menant comporte autant de plateaux de réaction que de plateaux de pression.

## Revendications

1. Système d'accouplement (10) entre un arbre moteur (12) de véhicule automobile et un arbre de transmission (14A, 14B) coaxiaux qui comporte :
- un dispositif d'embrayage à friction (22) avant qui comporte un ensemble menant rotatif (40) qui comporte au moins un plateau de réaction (24) ;
- un volant moteur (20) arrière coaxial à l'ensemble menant (40) qui est destiné à être lié en rotation avec l'arbre moteur (12) ;
- des moyens (54, 56) de liaison en rotation du volant moteur (20) et de l'ensemble menant (40) du dispositif d'embrayage (22) qui comportent un premier élément mâle (54) et un deuxième élément femelle (56) destinés à être emboîtés axialement de manière coulissante,
**caractérisé en ce que** les moyens (54, 56) de liaison en rotation sont dotés de moyens d'emboîtement réglables axialement dans un intervalle déterminé, **en ce que** sont prévu des moyens (60) de serrage circonférentiel de l'élément mâle (54) dans l'élément femelle (56) dans un état serré les éléments mâle (54) et femelle (56) étant positionnés en prise sans jeu circonférentiel, et **en ce que** le système d'accouplement comporte des moyens (66, 68) pour bloquer rigidement les éléments mâle (54) et femelle (56) dans leur état serré.

2. Système d'accouplement (10) selon l'une quelconque des revendications précédentes, **caractérisé en ce que** les éléments mâle (54) et femelle (56) sont agencés à une périphérie extérieure du système d'accouplement (10).

3. Système d'accouplement (10) selon l'une quelconque des revendications précédentes, **caractérisé en ce que** l'élément mâle est formé par une patte (54) et l'élément femelle est formé par une pince (56) dont les mâchoires (60) sont susceptibles de serrer circonférentiellement la patte (54).

4. Système d'accouplement (10) selon la revendication précédente, **caractérisé en ce que** les moyens de blocage de la pince (56) dans son état serré sont formés par un boulon (66, 68) qui s'étend circonférentiellement.

5. Système d'accouplement (10) selon la revendication précédente, **caractérisé en ce que** les moyens de serrage des mâchoires (60) sont formés par le boulon (66, 68).

6. Système d'accouplement (10) selon l'une quelconque des revendications 3 ou 4, **caractérisé en ce que** les moyens de serrage des mâchoires (60) de la pince sont formés par des moyens de rappel élastique des mâchoires (60) dans leur état serré.

7. Système d'accouplement (10) selon l'une quelconque des revendications précédentes, **caractérisé en ce que** la pince (56) est formée par une pièce en forme de "U" dont les ailes flexibles formant mâchoires (60) s'étendent axialement vers la patte (54) jusqu'à une extrémité libre (64).

8. Système d'accouplement (10) selon l'une quelconque des revendications 4 à 7, **caractérisé en ce que** le boulon comporte une vis (66) et un écrou (68), la tête (70) de la vis (66) étant susceptible d'être vissée par un outil de vissage (72).

9. Système d'accouplement (10) selon la revendication précédente, **caractérisé en ce qu'**il comporte des moyens (74) pour immobiliser l'écrou (68) du boulon au moins en rotation par rapport à la pince (56).

10. Système d'accouplement (10) selon la revendication précédente, **caractérisé en ce que** l'écrou (68) est immobilisé en rotation par coopération de formes complémentaires entre une face (80) de la pince (56) et l'écrou (68).

11. Système d'accouplement (10) selon l'une quelconque des revendications 3 à 10, **caractérisé en ce que** la vis (66) du boulon traverse les mâchoires (60) de la pince (56).

12. Système d'accouplement (10) selon la revendication précédente, **caractérisé en ce que** la patte (54) comporte une échancrure (58) qui est traversante circonférentiellement et qui est ouverte axialement vers la pince (56) pour permettre le passage de la vis (66) lors de l'emboîtement axial de la patte (54) dans la pince (56).

13. Système d'accouplement (10) selon la revendication précédente, **caractérisé en ce que** la vis (66) est susceptible de venir en butée axialement dans le fond de l'échancrure (58) pour bloquer le déplacement axial de la pince (56) dans le sens d'emboîtement par rapport à la patte (54).

14. Système d'accouplement (10) selon l'une quelconque des revendications précédentes, **caractérisé en ce que** l'élément mâle (54) est porté par le plateau de réaction (24) de l'ensemble menant (40) du dispositif d'embrayage (22), et **en ce que** l'élément femelle (56) est porté par le volant moteur (20).

15. Système d'accouplement (10) selon la revendication précédente, **caractérisé en ce que** la patte (54) s'étend radialement vers l'extérieur depuis un bord périphérique du plateau de réaction (24)

## Claims

1. System (10) for coupling between a drive shaft (12) of a motor vehicle and a coaxial transmission shaft (14A, 14B) which comprises:
- a front friction clutch device (22) which comprises a rotary drive assembly (40) which comprises at least one reaction plate (24);
- a rear engine flywheel (20) which is coaxial to the drive assembly (40), and is designed to be connected in rotation to the drive shaft (12);
- means (54, 56) for connection in rotation of the engine flywheel (20) and the drive assembly (40) of the clutch device (22) which comprise a first, male element (54) and a second, female element (56) which are designed to be nested axially in a sliding manner,
**characterised in that** the means (54, 56) for connection in rotation are provided with nesting means which are adjustable axially in a specific interval, **in that** means (60) are provided for circumferential clamping of the male element (54) in the female element (56) in a clamped state, the male (54) and female (56) elements being positioned engaged without circumferential play, and **in that** the coupling system comprises means (66, 68) for blocking the male (54) and female (56) elements rigidly in their clamped state.

2. Coupling system (10) according to any one of the preceding claims, **characterised in that** the male (54) and female (56) elements are arranged on an outer periphery of the coupling system (10).

3. Coupling system (10) according to any one of the preceding claims, **characterised in that** the male element is formed by a lug (54), and the female element is formed by a clamp (56), the jaws (60) of which can clamp the lug (54) circumferentially.

4. Coupling system (10) according to the preceding claim, **characterised in that** the means for blocking of the clamp (56) in its clamped state are formed by a bolt (66, 68) which extends circumferentially.

5. Coupling system (10) according to the preceding claim, **characterised in that** the means for clamping the jaws (60) are formed by the bolt (66, 68).

6. Coupling system (10) according to either of claims 3 or 4, **characterised in that** the means for clamping the jaws (60) of the clamp are formed by means for resilient return of the jaws (60) to their clamped state.

7. Coupling system (10) according to any one of the preceding claims, **characterised in that** the clamp (56) is formed by a part in the form of a "U", the flexible wings of which form jaws (60) which extend axially towards the lug (54), as far as a free end (64).

8. Coupling system (10) according to any one of claims 4 to 7, **characterised in that** the bolt comprises a screw (66) and a nut (68), the head (70) of the screw (66) being able to be screwed by means of a screwing tool (72).

9. Coupling system (10) according to the preceding claim, **characterised in that** it comprises means (74) for immobilising the nut (68) of the bolt at least in rotation relative to the clamp (56).

10. Coupling system (10) according to the preceding claim, **characterised in that** the nut (68) is immobilised in rotation by co-operation of complementary forms between a surface (80) of the clamp (56) and the nut (68).

11. Coupling system (10) according to any one of claims 3 to 10, **characterised in that** the screw (66) of the bolt passes through the jaws (60) of the clamp (56).

12. Coupling system (10) according to the preceding claim, **characterised in that** the lug (54) comprises a cut-out (58) which passes through circumferentially, and is open axially towards the clamp (56) in order to permit the passage of the screw (66) during the axial nesting of the lug (54) in the clamp (56).

13. Coupling system (10) according to the preceding claim, **characterised in that** the screw (66) can abut axially in the base of the cut-out (58) in order to block the axial displacement of the clamp (56) in the direction of nesting relative to the lug (54).

14. Coupling system (10) according to any one of the preceding claims, **characterised in that** the male element (54) is supported by the reaction plate (24) of the drive assembly (40) of the clutch device (22), and **in that** the female element (56) is supported by the engine flywheel (20).

15. Coupling system (10) according to the preceding claim, **characterised in that** the lug (54) extends radially towards the exterior from a peripheral edge of the reaction plate (24).

## Patentansprüche

1. Ankopplungssystem (10) zwischen einer Motorwelle (12) eines Kraftfahrzeugs und einer koaxialen Übertragungswelle (14A, 14B), umfassend:
- eine vordere Reibungskupplungsvorrichtung (22), die eine rotierende Antriebsgruppe (40) umfasst, welche zumindest eine Reaktionsplatte (24) aufweist;
- ein zur Antriebsgruppe (40) koaxiales hinteres Motorschwungrad (20), das dazu bestimmt ist, drehfest mit der Motorwelle (12) verbunden zu werden;
- Mittel (54, 56) zur Rotationsverbindung des Motorschwungrads (20) und der Antriebsgruppe (40) der Kupplungsvorrichtung (22), die ein erstes männliches Element (54) und ein zweites weibliches Element (56) umfassen, die dazu bestimmt sind, axial verschiebbar ineinander eingepasst zu werden,
**gekennzeichnet dadurch, dass** die Mittel (54, 56) zur Rotationsverbindung mit Einpassungsmitteln ausgestattet sind, die in einem bestimmten Intervall axial einstellbar sind, dadurch dass Mittel (60) zum umfangsmäßigen Einspannen des männlichen Elements (54) in dem weiblichen Element (56) vorgesehen sind, wobei das männliche (54) und weibliche (56) Element in einem eingespannten Zustand ohne umfangsmäßiges Spiel in Eingriff positioniert sind, und dadurch, dass das Ankopplungssystem Mittel (66, 68) zum starren Blockieren des männlichen (54) und weiblichen (56) Elements in ihrem eingespannten Zustand umfasst.

2. Ankopplungssystem (10) nach einem der vorherigen Ansprüche, **dadurch gekennzeichnet, dass** das männliche (54) und weibliche (56) Element in einem äußeren Umfangsbereich des Ankopplungssystem (10) angeordnet sind.

3. Ankopplungssystem (10) nach einem der vorherigen Ansprüche, **dadurch gekennzeichnet, dass** das männliche Element durch eine Lasche (54) gebildet ist und das weiblich Element durch eine Klemme (56) gebildet ist, deren Klauen (60) geeignet sind, die Lasche (54) umfangsmäßig einzuspannen.

4. Ankopplungssystem (10) nach dem vorherigen Anspruch, **dadurch gekennzeichnet, dass** die Mittel zum Blockieren der Klemme (56) in ihrem gespannten Zustand durch einen Bolzen (66, 68) gebildet sind, der sich umfangsmäßig erstreckt.

5. Ankopplungssystem (10) nach dem vorherigen Anspruch, **dadurch gekennzeichnet, dass** die Mittel (60) zum Spannen der Klauen durch den Bolzen (66, 68) gebildet sind.

6. Ankopplungssystem (10) nach einem der vorherigen Ansprüche, **dadurch gekennzeichnet, dass** die Mittel (60) zum Spannen der Klauen der Klemme durch elastische Mittel (60) zum Rückstellen der Klauen in ihren gespannten Zustand gebildet sind.

7. Ankopplungssystem (10) nach einem der Ansprüche 3 oder 4, **dadurch gekennzeichnet, dass** die Klemme (56) durch ein Teil in der Form eines "U" gebildet ist, dessen flexible Flügel Klauen (60) bilden, die sich axial in Richtung zu der Lasche (54) bis zu einem freien Ende (64) erstrecken.

8. Ankopplungssystem (10) nach einem der Ansprüche 4 bis 7, **dadurch gekennzeichnet, dass** der Bolzen eine Schraube (66) und eine Mutter (68) umfasst, wobei der Kopf (70) der Schraube (66) geeignet ist, durch ein Schraubwerkzeug geschraubt zu werden.

9. Ankopplungssystem (10) nach dem vorherigen Anspruch, **dadurch gekennzeichnet, dass** es Mittel (74) umfasst, durch welche die Mutter (68) des Bolzens zumindest rotatorisch in Bezug zu der Klemme (56) festsetzbar ist.

10. Ankopplungssystem (10) nach dem vorherigen Anspruch, **dadurch gekennzeichnet, dass** die Mutter (68) rotatorisch durch Zusammenwirken von komplementären Formen zwischen einer Fläche (80) der Klemme (56) und der Mutter (68) festgesetzt ist.

11. Ankopplungssystem (10) nach einem der Ansprüche 3 bis 10, **dadurch gekennzeichnet, dass** die Schraube (66) des Bolzens die Klauen (60) der Klemme (56) durchquert.

12. Ankopplungssystem (10) nach dem vorherigen Anspruch, **dadurch gekennzeichnet, dass** die Lasche (54) einen Ausschnitt (58) aufweist, der umfangsmäßig durchquerbar ist, und der axial in Richtung zu der Klemme (56) offen ist, um den Durchgang der Schraube (66) beim axialen Einpassen der Lasche (54) in die Klemme (56) zu erlauben.

13. Ankopplungssystem (10) nach dem vorherigen Anspruch, **dadurch gekennzeichnet, dass** die Schraube (66) geeignet ist, axial im Boden des Ausschnitts (58) in Anschlag zu kommen, um die axiale Verlagerung der Klemme (56) in der Richtung des Einpassens relativ zu der Lasche (54) zu blockieren.

14. Ankopplungssystem (10) nach einem der vorherigen Ansprüche, **dadurch gekennzeichnet, dass** das männliche Element (54) von der Reaktionsplatte (24) der Antriebsgruppe (40) der Kupplungsvorrichtung (22) getragen ist, und dadurch, dass das weibliche Element (56) von dem Motorschwungrad (20) getragen ist.

15. Ankopplungssystem (10) nach dem vorherigen Anspruch, **dadurch gekennzeichnet, dass** sich die Lasche (54) radial nach außen bis zu einem Umfangsrand der Reaktionsplatte (24) erstreckt.
